# EUROPEAN PATENT APPLICATION

(11) **EP 0 652 064 A1**
(43) Date of publication of application: **10.05.1995**
(21) Application number: 94103867.1
(22) Date of filing: 14.03.1994
(51) Int. Cl.: B23B 51/10

(54) **Trimming tool to trim cut rims of both metal and plastic pipes**

(30) Priority: 21.10.1993 IT PZ930003 U
(71) Applicant: I.CO.MA.R. s.n.c., I-85050 Tito Scalo (PZ) (IT)
(72) Inventor: Salvatore, Giuseppe Rocco, S. Angelo le Fratte (PZ) (IT)
(74) Representative: Russo, Saverio, Dott. Ing.

(57) **Abstract**

The trimming tool is formed by a hollow cylindrical grip 1 into which is inserted a hollow cone 2, the inner and outer surfaces of which are formed, respectively, by adjacent blades 2a and 2b.

The tool may be used from both ends of the cylindrical grip.

## Description

The invention consists in a manual tool for eliminating burrs which form around cut rims of metal pipes particularly, and, more generally, of both metal and plastic pipes by cutting with small saws or other suitable tools.

More in particular, it consists in a universal tool, manually operated, in order to eliminate burrs from cut rims of pipes made of steel, copper and alluminium, and to create, both on the inner and outer surfaces, of said cut rims, an indispensable bevelling in order to obtain a water-tight connection between pipes and branch-pipe fittings.

As is known, to trim the cut rims of small diameter metal pipes destined for hydraulic use, assemblers use manual tools, varying in name, although having the same function, like, trimming tools, bevelling tools or flaring tools.

One of the said tools, used to bevel both the inner and outer surfaces of cut rims of metal pipes, consists in a plastic hollow cone, upon which are applied, along three dephased generatrixes of 120°, and both on the inner and outer surfaces, three sharp, forged cutting edges: the cone is contained within a cylindrical body which acts as a grip.

Another tool to trim and flare the inner part of the cut rim of the pipe, is formed by a metal cone in HSS steel, the outer surface of which is worked so as to form adjacent cutting edges, being slightly helicoidal in shape, and which, nearly follow the course of the generatrixes of the cone: such a tool allows for an effective flaring of the inner cut rim of the pipe, even with limited rotations.

The first type tools present various drawbacks.

In fact, the limited number of cutting edges requires rotations of at least 120° of the axis of the tube, in respect to that of the tool, in order to carry out an initial scraping of the cut rim to be trimmed: each additional scraping requires a further rotation of 120°.

Moreover, the cutting edges of the tool may easily become detached from the inner and outer surfaces of the cone and break if excessive pressure is exerted on the cut rim of the pipe.

The second type of trimming tool allows only for the trimming and flaring of the inner surface of the cut rim of the pipe and, therefore, in order to carry out the bevelling of the outer surface, it is necessary to have another suitable tool available for trimming.

The aim of the trimming tool according to the invention is to eliminate the above mentioned drawbacks.

The invention, as characterized in the claims, solves the problem of obtaining a complete trimming, both of the inner and outer surfaces of the circular cut rim of the pipe, by means of limited rotations of the axis of the pipe in respect to that of the tool, so as to scrape the cut rim several times, in a short space of time.

With a single grip ,the invention also solves the problem of operating the tool, to trim both the inner and outer surfaces of the cut rims of the pipe.

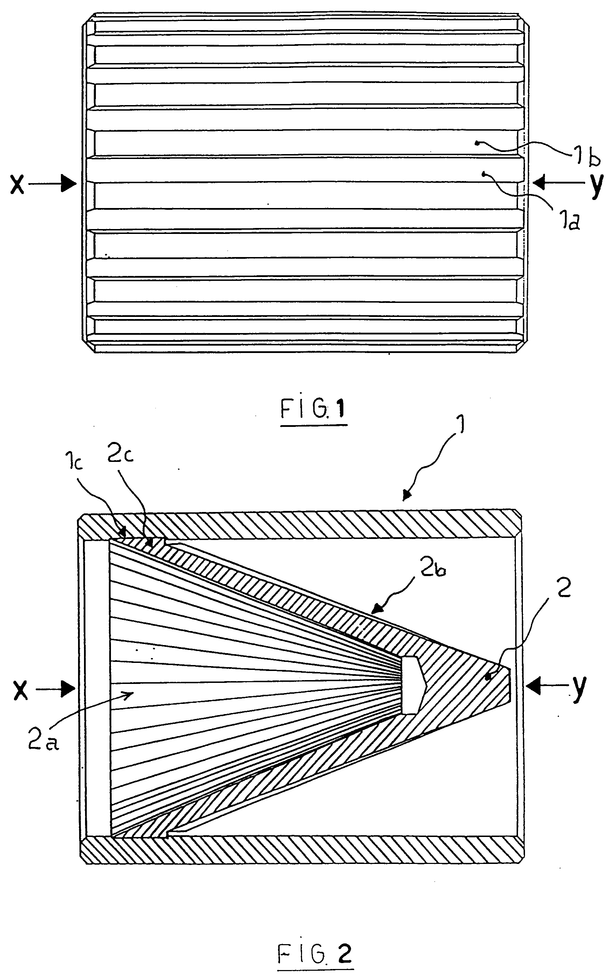

One way of carrying out the invention is described in detail below with reference to drawings which illustrate only one specific embodiment, in which:-
fig. 1, the cylindrical body of the tool also acting as a grip;
fig. 2, the longitudinal section AA of the tool;

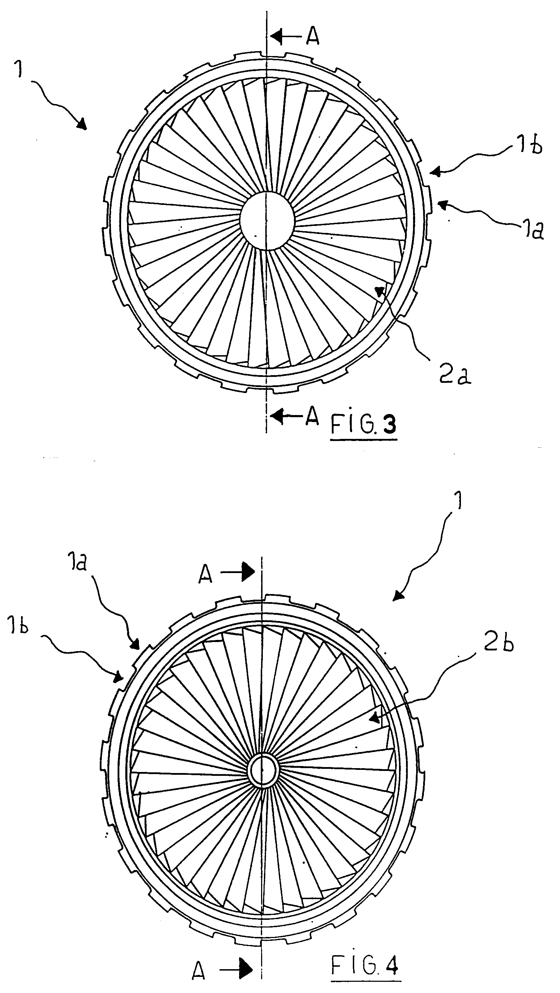

fig. 3, an axial view of the inner part of the tool;
fig. 4, an axial view of the outer part of the tool;
The trimming tool, in accordance with the invention, is formed by a cylindrical grip 1, into the cavity of which a hollow cone 2, in steel for tools HSS and having undergone the necessary heat treatments, is inserted.

Both the inner and outer surfaces of the cone are formed by, respectively blades 2a and 2b, having a triangular section, realised by suitable machines, for example, slotters or other means: to connect the cone to the cylindrical body, the base of the cone protrudes forming a ring 2c, which is inserted in a cavity 1c in the inside of the cylindrical cavity formed by the grip.

The blades are adjacent and each of these has a rectilinear axis, which is superimposed on the corresponding generatrix of the cone.

In a preferred embodiment of the invention, both the outer and inner surfaces of the cone are formed by forty blades: the cutting angle is of approximately 70°, while the superior and inferior rake angles are of approximately 25° and 5° respectively.

In the said embodiment, the generatrixes and consequently, the axes of the blades, form an angle of approximately 30° with the axis of the cone, which has a base diameter of approximately 50mm; given the high number of cutting edges, an excellent trimming may be obtained on the whole circumference of the cut rim of pipes of up to a diameter of 50mm, also only with a limited rotation of 9°.

The cylindrical grip 1 is bivalent, and allows the tool to be used from both ends.

In order to obtain a good hold, the outer surface of the cylindrical grip 1 is grooved in such a way as to form ridged parts 1a and grooves 1b.

The advantages of the described tool offered to assemblers of hydraulic plants are remarkable.

Using a single tool, the assembler can, in fact, carry out trimming of cut rims of pipes, ranging from approximately 7mm to 50mm in diameter, both on the inner and outer surfaces.

## Claims

1. "Trimming tool to trim cut rims of both metal and plastic pipes" characterized by a hollow cylindrical grip (1) into which a hollow cone (2), made of steel for tools, is solidly inserted, both the inner and outer surfaces of cone being formed by adjacent blades, having rectilinear axes (2a) and (2b) respectively, positioned along the generatrix of the same cone, the section of the blades being triangular, decreasing from the base of the said cone and arriving at the vertex where it tapers into a point.

2. Trimming tool as in Claim 1, characterized by the fact that the cutting edges (2a) and (2b) of the cone, which carry out the trimming of, respectively, the inner and outer surfaces of the cut rim of the pipe, are alternately accessible from both ends of the cylindrical grip.

3. Trimming tool as in Claim 1, characterized by the combination of a hollow cylindrical body (1), acting as a grip, and a cone (2), of steel for tools, the inner and outer surfaces of which are formed by rectilinear axis blades having a triangular section, the cone being made solid to the inner surface of the cylindrical grip so that its axis coincides with the axis of the same above mentioned cylindrical grip, the axis of the same above mentioned cylindrical grip, the area of the section of each blade decreasing beginning from the base of the cone and arriving at the vertex, where it tapers into a point.

4. Trimming tool as in Claim 1, characterized by the fact that the blades, realised using slotters or other suitable manufacturing processes, are of the same material for tools which forms the cone (2) inserted into the inside of the grip of the same trimming tool.

5. Application of the trimming tool, as in the preceding Claims, to trim and bevel both the inner and outer surfaces of cut rims of metal or plastic pipes of any diameter, by means of a hollow cone, of steel for tools, fitted with blades having rectilinear axes and a triangular section which decreases beginning from the base of the cone, the axes of the said blades being positioned along the generatrixes, both on the inner and outer surfaces of same cone.
